**Europäisches Patentamt**

**European Patent Office**

**Office européen des brevets**

(19)

(11) Veröffentlichungsnummer: **0 380 798**

**A2**

(12) # EUROPÄISCHE PATENTANMELDUNG

(21) Anmeldenummer: 89123273.8

(22) Anmeldetag: 15.12.89

(51) Int. Cl.⁵: **H04Q 3/58, H04M 3/50**

(30) Priorität: 30.01.89 DE 3902636

(43) Veröffentlichungstag der Anmeldung:
08.08.90 Patentblatt 90/32

(84) Benannte Vertragsstaaten:
**AT BE CH DE ES FR GB IT LI NL SE**

(71) Anmelder: **TELENORMA Telefonbau und Normalzeit GmbH**
**Mainzer Landstrasse 128-146**
**D-6000 Frankfurt am Main(DE)**

(72) Erfinder: **Hutt, Hans-Ulrich**
**Adelberger Strasse 35**
**D-7336 Uhingen(DE)**
Erfinder: **Bühler, Udo**
**Am Kugelrain 24**
**D-7336 Uhingen(DE)**

(54) **Verfahren zur Darstellung von Anruferdaten bei einer Kommunikations-Vermittlungsanlage.**

(57) Bei der Signalisierung von Anrufen an Bedien- oder Abfrageplätzen von Kommunikations-Vermittlungsanlagen soll zusätzlich die Identität eines Anrufers angezeigt werden können. Außerdem sollen für einen Anrufer gespeicherte Daten schon im Anrufzustand bereitgestellt werden, damit diese bei der Abfrage einer ankommenden Verbindung zusätzlich zur Verfügung stehen.

Durch Einwahl von Ziffern wie bei einer Durchwahlverbindung wird zunächst ein Speicher in der Kommunikations-Vermittlungsanlage angesteuert. Diese Ziffern sind einem Anrufer zugeordnet und bewirken, daß die Bezeichnung des Anrufers aus dem Speicher ausgegeben wird, damit diese dem Anrufsignal zugeordnet angezeigt werden kann. Die aus dem Speicher ausgelesene Information wird gleichzeitig einer Datenverarbeitungsanlage angeboten, damit schon beim Anruf ein für den betreffenden Anrufer vorhandener Datensatz bereitgestellt wird, welcher beim Durchschalten der Verbindung zu demjenigen Bedien- oder Abfrageplatz übermittelt und dort angezeigt wird, wo der Anruf abgefragt wurde.

Das Verfahren kann mit Vorteil bei Fernsprechvermittlungsanlagen, insbesondere Maklervielfachanlagen eingesetzt werden, wo eine Vielzahl von Bedien-oder Abfrageplätzen vorgesehen ist und eine individuelle Bearbeitung von Anrufen erforderlich ist.

## Verfahren zur Darstellung von Anruferdaten bei einer Kommunikations-Vermittlungsanlage

Die Erfindung betrifft ein Verfahren zur Darstellung von Anruferdaten bei einer Kommunikations-Vermittlungsanlage nach dem Oberbegriff des Patentanspruches 1.

Aus der DE-PS 32 25 562 ist ein Verfahren zur automatischen Auftragsannahme unter Verwendung einer Fernmelde-, insbesondere Fernsprechvermittlungsanlage bekannt. Dabei wird ein Teil des Rufnummernvorrates einer Fernsprechnebenstellenanlage dazu benutzt, Anrufer, welche als Auftraggeber in Erscheinung treten, zu identifizieren. Wenn also im Anschluß an die Belegung der Fernsprechnebenstellenanlage eine beispielsweise vierstellige Rufnummer gewählt wird, welche als Identifizierungsnummer gekennzeichnet ist, so führt die Verbindung nicht zu einem Nebenstellenanschluß sondern wird zu einer Datenverarbeitungsanlage weitergegeben. Von dort aus wird dann ein vorgegebener Textausdruck veranlaßt, wo u. a. die Adresse des Auftraggebers angegeben ist. Bei dieser Verfahrensweise ist es nicht ohne weiteres möglich, einen Anruf direkt abzufragen, weil eine automatische Abwicklung der Auftragsannahme gewünscht wird.

Bei Kommunikations-Vermittlungsanlagen mit Bedien- oder Abfrageplätzen ist es von Vorteil, wenn bei einem Anruf etwas über die Identität des Anrufers ausgesagt werden kann. Da bei herkömmlichen Vermittlungssystemen nicht vorgesehen ist, daß eine Information zur Kennzeichnung des Anrufers übertragen wird, können Anrufe nur gleichartig signalisiert werden, ohne daß dabei bekannt gemacht werden kann, wer der Anrufer ist.

Ausgehend vom vorbeschriebenen Stand der Technik ist es Aufgabe der Erfindung, die Anrufsignalisierung, insbesondere an Abfrage- oder Bedienplätzen von Fernsprechvermittlungsanlagen so zu gestalten, daß zusätzlich zum Anrufsignal eine Kennzeichnung des Anrufers bewirkt werden kann. Außerdem sollen bei der Abfrage eines Anrufes zusätzliche, den Anrufer betreffende Informationen bereit gestellt und angezeigt werden, so daß eine optimale Bearbeitung von Anrufen möglich ist.

Diese Aufgabe wird mit Merkmalen gelöst, wie sie im Patentanspruch 1 angegeben sind.

Damit wird in vorteilhafter Weise erreicht, daß auf einfache Weise schon beim Anruf, ggf. jeder einzelnen Leitung zugeordnet angezeigt wird, von wo der Anruf kommt. Damit ist es möglich, daß bei im Vielfach geschalteten Anrufsignalen, welche an mehreren Bedien- oder Abfrageplätzen parallel erscheinen von derjenigen Bedienungsperson die Abfrage durchgeführt wird, die sich dafür zuständig fühlt. Bei der Abfrage eines Anrufes werden zusätzliche den Anrufer betreffende Daten angezeigt, so daß Notizen, beispielsweise über Vereinbarungen und/oder Terminabsprachen zur Verfügung stehen können.

Mit den in den Unteransprüchen angegebenen Weiterbildungen der Erfindung wird erreicht, daß die Anwendungsmöglichkeiten vergrößert werden und die betrieblichen Vorteile noch weiter gehend verbessert werden.

Ein Ausführungsbeispiel der Erfindung, wird nachfolgend anhand einer Zeichnung näher erläutert.

Wenn für einen Teilnehmer TA eine Anruferkennzeichnung in dem dafür vorgesehenen Speicher SP abgelegt ist, so ist für diesen Teilnehmer TA eine Ziffernfolge festgelegt, die Bestandteil der zu wählenden Rufnummer ist. Diese Rufnummer führt aber nicht zu einem in Durchwahl anrufbaren Nebenstellenanschluß sondern verursacht ein Anrufsignal an mindestens einem der Bedien- oder Abfrageplätze P1 - Pn. Das Anrufsignal kann jedoch auch ohne weiteres auf allen Bedien- oder Abfrageplätzen P1 - Pn gleichzeitig erscheinen. Dies wird durch Auswerten der letzten Ziffern der Rufnummer erreicht.

Mit den letzten Ziffern der eingewählten Rufnummer wird außerdem der Speicher SP adressiert, so daß eine dem anrufenden Teilnehmer zugeordnete Information ausgelesen werden kann. Diese Information wird zu den Bedien- oder Abfrageplätzen P1 - Pn übertragen, so daß dem Anrufsignal zugeordnet eine zusätzliche Anzeige an den Bildschirmen BS1 - BSn erscheinen kann. Die aus dem Speicher SP ausgelesene Information wird außerdem an eine Datenverarbeitungsanlage DVA weitergegeben, welche an die Kommunikations-Vermittlungsanlage KVA angeschlossen ist. Damit wird ein Suchkriterium gebildet, um zusätzliche den Anrufer betreffende Daten bereit zu stellen. Dabei kann es sich um ein Formular einer elektronischen Datei handeln, welches für den anrufenden Teilnehmer TA angelegt worden ist. Dieses Formular wird in einem nicht dargestellten Speicher der Datenverarbeitungsanlage DVA bereit gehalten, so daß es sofort zur Verfügung steht, wenn der Anruf abgefragt wird.

Bei der Abfrage eines mit Anruferkennzeichen versehenen Anrufes wird das in der Datenverarbeitungsanlage DVA bereitgehaltene Formular von der Kommunikations-Vermittlungsanlage KVA angefordert und sofort auf den Bildschirm, z. B. BS1 gebracht, welcher zu dem Bedien- oder Abfrageplatz P1 gehört, von wo aus der Anruf abgefragt wurde. Damit wird an dem die Gesprächsverbindung herstellenden Bedien- oder Abfrageplatz P1 eine Information sichtbar, welche die Bedienungsperson befähigt, den Anruf individuell zu beantworten. Außerdem ist es möglich, sich während eines Gespräches ergebende Fragen zu notieren, und sonstige Vereinbarungen und Absprachen schriftlich festzuhalten, indem in dafür vorgesehene Felder des angezeigten Formulars auf dem Bildschirm entsprechende alphanumerische Eintragungen vorgenommen werden. Wenn eine Verbindung auf einen anderen Bedien- oder Abfrageplatz, z. B. P2 umgeschaltet wird, weil beispielsweise der dort befindliche Sachbearbeiter eine Frage besser beantworten kann, so wird bei der Weitervermittlung dieser Verbindung die Bildschirmanzeige zu dem die Verbindung übernehmenden Bedien- oder Abfrageplatz P2 übertragen. Es stehen somit auch weiterhin die den anrufenden Teilnehmer TA betreffenden Informationen zur Verfügung. Beim Auslösen einer Verbindung wird erneut die Datenverarbeitungsanlage DVA angesteuert, wenn das für den Teilnehmer TA angezeigte Dateiformular geändert worden ist. Auf diese Weise wird gewährleistet, daß die in der Datenverarbeitungsanlage DVA eingespeicherte Information laufend aktualisiert wird. Durch eine Befehlsgabe von den Bedien- oder Abfrageplätzen P1 - Pn an die Datenverarbeitungsanlage DVA kann außerdem veranlaßt werden, daß die für einen bestimmten Teilnehmer, z. B. TA, vorhandenen Informationen an einen Drucker gegeben werden, damit eine Unterlage entsteht, auf der vermerkt ist, welche Maßnahmen durchzuführen sind.

Das vorstehend beschriebene Verfahren kann auch dann angewendet werden, wenn einen Anrufer kennzeichnende Daten bei einer ankommenden Verbindung angeboten werden, wie dies bei einem dienste-integrierenden Kommunikationsnetz (ISDN) der Fall sein wird. Für einen anrufenden Teilnehmer vereinfacht sich dann der Wählvorgang dadurch, daß die letzten Ziffern einer Rufnummer weggelassen werden können. Innerhalb der Kommunikations-Vermittlungsanlage ist es dann nicht mehr notwendig, einen Teil des Rufnummernvorrats für die Identifizierung von Anrufern bereit zu stellen. Mit der von der vorgeordneten Vermittlungsstelle angebotenen Anruferkennzeichnung kann der Speicher SP direkt angesteuert werden.

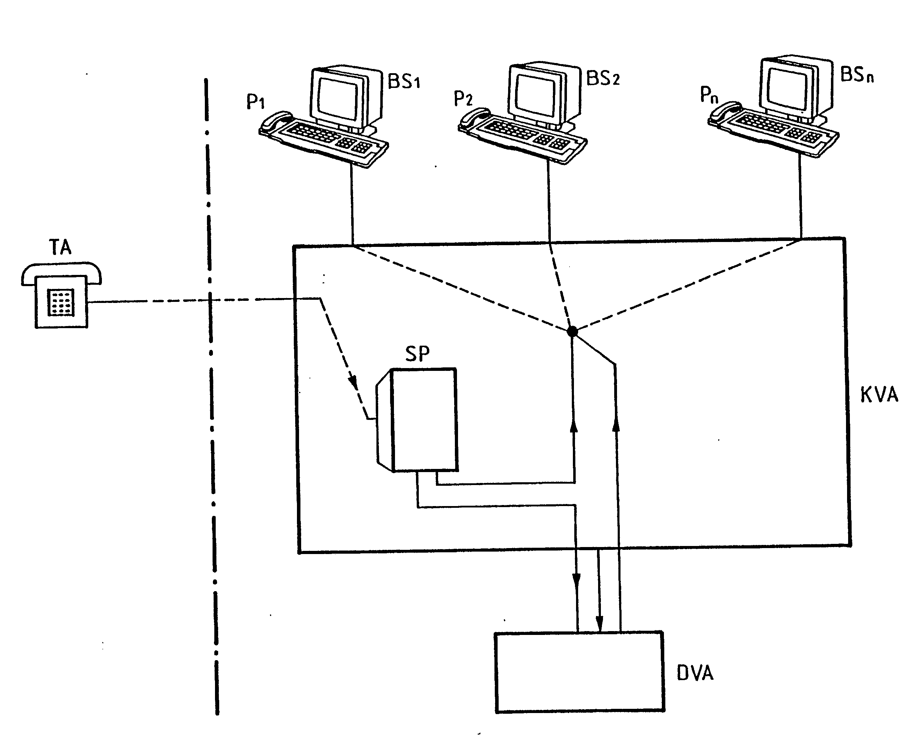

**Ansprüche**

1. Verfahren zur Darstellung von Anruferdaten bei einer Kommunikations-Vermittlungsanlage, an die eine Datenverarbeitungsanlage angeschlossen ist, welche über die Kommunikations-Vermittlungsanlage Eingangsdaten erhält und in Abhängigkeit davon gespeicherte Daten ausgibt, wobei ein Teil des Rufnummernvorrates der Kommunikations-Vermittlungsanlage dazu benutzt wird, die zur Adressierung dienenden Eingangsdaten für die Datenverarbeitungsanlage zu liefern, dadurch gekennzeichnet, daß durch Einwahl von Ziffern wie bei einer Durchwahlverbindung zunächst ein Speicher (SP) in der Kommunikations-Vermittlungsanlage (KVA) angesteuert wird, damit von dort die Bezeichnung des Anrufers (TA) ausgegeben wird, welche dann zur Ergänzung der optischen Anrufanzeige bei den Bedien- oder Abfrageplätzen (P1 - Pn) dient, und daß gleichzeitig außerdem die Datenverarbeitungsanlage (DVA) angesteuert wird, damit schon beim Anruf ein für den betreffenden Anrufer (TA) vorhandener Datensatz bereitgestellt wird, welcher beim Durchschalten der Verbindung zu demjenigen Bedien- oder Abfrageplatz übermittelt und dort angezeigt wird, wo der Anruf abgefragt wurde.

2. Verfahren nach Anspruch 1, dadurch gekennzeichnet, daß der Datensatz des Anrufers (TA) bei der Weitervermittlung der Verbindung zu der Stelle hin übertragen wird, welche die Verbindung übernimmt.

3. Verfahren nach Anspruch 1, dadurch gekennzeichnet, daß der Datensatz eines Anrufers (z. B. TA) während einer bestehenden Verbindung geändert werden kann.

4. Verfahren nach Anspruch 1, dadurch gekennzeichnet, daß eine Einwahl von Ziffern nicht erforderlich ist, wenn Anruferkennzeichen bei der ankommenden Verbindung mitgeliefert werden, womit dann der Speicher (SP) angesteuert werden kann.

TN – 4177